# EUROPEAN PATENT APPLICATION

(11) **EP 1 202 158 A2**
(43) Date of publication of application: **02.05.2002**
(21) Application number: 01125912.4
(22) Date of filing: 30.10.2001
(51) Int. Cl.: G06F 3/06

(54) **Operating system user interface for staged write media**

(30) Priority: 31.10.2000 US 244830 P; 03.05.2001 US 848936
(71) Applicant: MICROSOFT CORPORATION, Redmond, Washington 98052-6399 (US)
(72) Inventor: De Vorchik, David G., Seattle WA 98119 (US); Beam, Tyler K., Redmond WA 98052 (US); Moore, Jason F., Redmond WA 98052 (US); Guzak, Chris J., Kirkland WA 98034 (US); Hill, Emily N., Woodinville WA 98072 (US); Magendanz, Chad L., Issaquah WA 98027 (US); Shapiro, Daniel J., Redmond WA 98052 (US)
(74) Representative: Grünecker, Kinkeldey, Stockmair & Schwanhäusser Anwaltssozietät

(57) **Abstract**

The system disclosed herein supports staged-write media such as optical CDs. The system includes an operating system that accepts requests to save resources such as files. When the files are to be saved to a staged-write media, the files are merely noted or referenced as being staged. Later, upon a user indication, the staged files are actually written to the staged-write media. Specifically, the files are written upon detecting a user attempt to remove the staged-write medium.

## Description

### RELATED APPLICATIONS

This application claims priority to a provisional patent application No. 60/244,830, entitled "CD or DVD Recording," filed on 10/31/00.

### TECHNICAL FIELD

This invention relates to stage-write storage media such as optical CDs and to user interfaces for writing to such media.

### BACKGROUND

Computers make frequent use of different types of removable storage media for various purposes. In the past, most types of removable storage media utilized magnetic means for data storage. Typical hard disks, magnetic tape, and so-called "floppy" disks are common examples of this type of technology. These media allow for repeated reading and writing―the magnetic information at a given location can be changed repeatedly.

More recently, optical-based memory media has been widely used for certain purposes in conjunction with computers. A CD-ROM drive uses a low-power laser beam to read digitized (binary) data that has been encoded in the form of tiny pits on an optical disk. The drive then feeds the data to a computer for processing. In many cases, CD-ROMs can be written only during manufacture, and are thereafter read-only devices. This situation has changed, however, in the last few years.

The standard compact disc (CD) was introduced in 1982 for digital audio reproduction using a standard called "Redbook". It was quickly adopted by the computer industry as a low-cost storage-and-distribution medium for large computer programs, graphics, and databases, using a different standard known as "ISO9660". With a storage capacity of 680 megabytes, the ISO9660 CD or "CD-ROM" found rapid commercial acceptance as an alternative to floppy disks (with a typical capacity of 1.44 megabytes).

Unlike conventional magnetic storage technologies (e.g., tapes, floppy disks, and hard disks), older types of CDs and CD-ROMs are not recordable-hence the tag "read-only." In the early 1990s a new type of CD became available: CD-Recordable, or CD-R. These discs differ from regular CDs in having a light-sensitive organic dye layer which can be "burned" to produce a chemical "dark" spot, analogous to an ordinary CD-ROM's pits, that can be read by existing CD and CD-ROM players. Such CDs are also known as WORM discs, for "Write Once Read Many." A rewritable version known as CD-RW was introduced in the mid-1990s.

A significant advantage of these optical media (referred to collectively as CDs herein) is their capacity for storing vast amounts of data at a very low cost. A typical CD can be produced for well under a dollar, and can contain 680 megabytes of data.

From a consumer standpoint, however, writable CDs have been difficult to use. A significant difficulty arises because writing to a CD is optimally performed as a batch process―in which the entire CD is recorded in a single, uninterrupted process. This complicates the process of creating a CD, especially because the user is often more familiar with storage media on which individual files can be written separately and individually.

Attempts have been made to provide consumer-oriented software applications to simplify the process of CD creation. One type of product uses a process referred to as "packet writing," in conjunction with a familiar drag and drop file interface. This allows a user to drag a file's icon representation into a screen area that represents a CD. In response, the file is written immediately to the CD using packet writing. The disadvantage of this process, however, is that the resulting CD is incompatible with some computers.

Other attempts have also been made in stand-alone application programs to hide underlying details of the write process from the user, while presenting a convenient user interface (UI). For example, such a stand-alone program might provide a graphical area into which a user places file icons (representing individual files). Once the desired files have been designated by placing their icons in this area, the user issues a "write" command, typically by engaging or selecting some element of the program's UI. The program responds by instructing the user to insert a CD. Once the proper CD has been inserted, the user indicates this by selecting another UI element such as an "OK" box. The program then programs the CD and notifies the user when programming has been completed.

### SUMMARY

Described herein are an operating system and a resource browser that is supported by the operating system. In response to browsing to a resource such as a writable CD, the resource browser divides its content area into a stored resource area and a staged resource area. Files can be dragged into the staged area, where they remain without actually being written to the CD. The resource browser begins the write process of all staged resources when a user attempts to remove the CD. This functionality is also implemented by the operating system, apart from the visible browser UI. For example, files can be saved to a CD from context menus and from application programs. Any saved files will actually be staged― the files (or references to the files) will be copied to a staging area, and actual writing will take place after a user event such as attempting to remove the CD media. During writing, the system makes use of a pre-allocated contiguous area of mass storage―an image of the desired CD is created in this contiguous area. This speeds the write process and also ensures that such memory will always be available for CD writing.

As files are designated, references to the files are saved in a designated area. In one embodiment, subsequent changes to the underlying files will be reflected in the data written to CD. In another embodiment, however, the operating system creates unchanged copies of designated files whenever the original files are changed. Stored references are updated to indicate the unchanged copies, which are subsequently written to CD instead of the changed originals.

### BRIEF DESCRIPTION OF THE DRAWINGS

Fig. 1 is a block diagram of a computer system that implements a resource browser such as described herein.
Figs. 2 and 3 are views of a user interface employed by the described resource browser.
Figs. 4 and 5 show context menus as described herein for use with staged-write media.
Fig. 6 is a flowchart illustrating methodological aspects of the described technology.

### DETAILED DESCRIPTION

The following description sets forth a specific embodiment that incorporates elements recited in the appended claims. The embodiment is described with specificity in order to meet statutory requirements. However, the description itself is not intended to limit the scope of this patent. Rather, the inventors have contemplated that the claimed invention might also be embodied in other ways, to include different elements or combinations of elements similar to the ones described in this document, in conjunction with other present or future technologies.

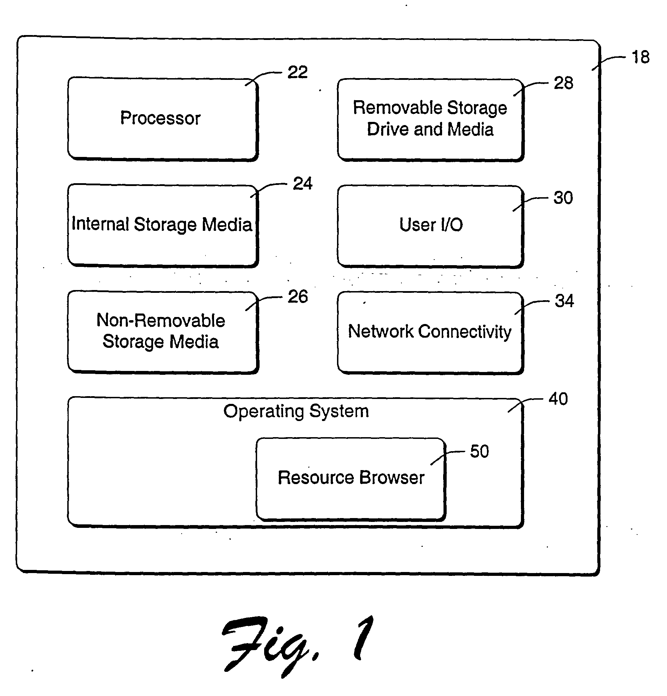

Fig. 1 shows pertinent elements of a system, computer, or computerized device 18 that uses staged-write storage media such as the types of CDs described above. Computer 18 includes a processing unit 22 and internal computer-storage media 24 such as electronic memory. The computer also has other non-removable storage 26, such as hard disk memory, and removable storage 28. Removable storage 28 includes both a storage drive and a removable storage medium. In this case, the removable storage medium is a writable CD.

Computer 18 may have input/output devices 30 such as a keyboard, mouse, stylus, sound card, display device, etc. In addition, the computer might include network connections 34 to other devices, computers, networks, servers, etc. using either wired or wireless media. All these components are well known in the art and need not be discussed at length here. Many other components might also be present.

The functionality of the computer is embodied in most cases by computer-executable instructions, such as program modules, that are executed by the computer's processor(s). Generally, program modules include routines, programs, objects, components, data structures, etc. that perform particular tasks or implement particular abstract data types. Tasks might also be performed by instructions from remote processing devices that are linked through a communications network. In a distributed computing environment, program modules may be located in both local and remote computer storage media. For purposes of illustration, programs and other executable program components in are illustrated herein as discrete blocks, although it is recognized that such programs and components reside at various times in different storage components of the computer, and are executed by the data processor(s) of the computer.

The instructions and/or program modules reside at different times in the various computer-readable media available to the computer. Programs are typically distributed on some type of removable and/or remote media, or by a server on some form of communication media. From there, they are installed or loaded into the secondary disk memory of a computer. At execution, they are loaded at least partially into the computer's primary electronic memory. The invention described herein includes these and other various types of computer-readable media when such media contain instructions programs, and/or modules for implementing the operations described below in conjunction with a microprocessor or other data processors. The invention also includes the computer itself when programmed according to the operations described below.

The exemplary computer 18 utilizes a graphical-based operating system 40 such as one of the Windows® brand of operating systems. Such an operating system implements what has become known as a GUI or "graphical user interface" upon the display surface of the computer's display device. The GUI allows a user to interact with the computer to manage and utilize computer resources. As will be described below, such interaction includes graphically browsing to and between different computer areas that contain resources managed by the operating system. Some of the interaction also takes place through applications programs that utilize aspects of the operating system. For example, an application program might prompt a user to save a file, and respond by instructing the operating system to save the file.

For purposes of this example, removable storage 28 is of a type for which a plurality of different data items are designated and staged, and then written in a batch or continuous writing process. This is currently the case with various types of optical media such as writable and rewritable CDs of the types described above. In the described embodiment, the storage media is removable. Specifically, removable storage 28 comprises an optical storage drive that is addressed as "D:" from within the operating system. The storage drive receives removable media such as CDs. The CDs themselves may have read-only, write-once, or rewrite capabilities.

### Resource Browser

Resource browsing is one function typically provided by an operating system such as Windows® operating systems. The operating system components that implement this functionality are referred to collectively herein as resource browser components or simply as a resource browser, and are shown in Fig. 1 as a component 50 of operating system 40. In practice, the functionality of a resource browser is implemented by various different parts of the operating system.

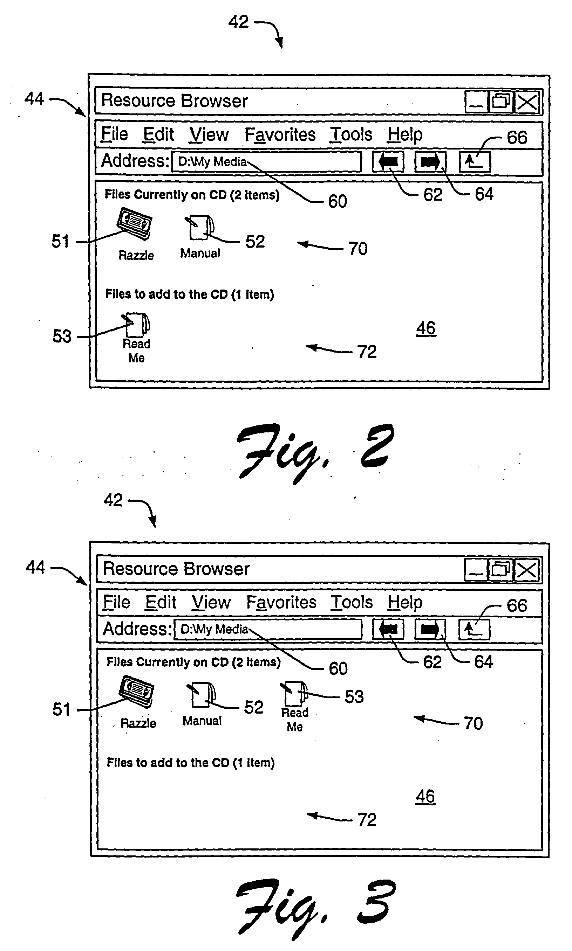

Browser functionality is exposed to a user through a graphical user interface (GUI) 42 as shown in Fig. 2. Interface 42 is positioned as a "window" within the bounds of a larger UI area such as is sometimes referred to as a user "desktop." This arrangement will be familiar to users of modern, graphically-oriented operating systems.

Browser window 42 includes a control area 44 and a content area 46. Control area 44 has various controls relating to browser functionality. The content area 46 contains a plurality of icons that represent computer accessible or controllable resources. Icons 51, 52, and 53 are shown as examples. Typically, the icons are customized in accordance with the types of resources they represent.

A user can move the icons on the computer's display surface by "dragging" them with a mouse or other input device. In many cases, moving an icon from one display area to another has a corresponding effect on the resource represented by the icon. In other words, a resource can be physically moved or copied by moving its icon. For example, moving an icon into content area 46 from some other area causes that icon's resource to be moved (or copied) to the physical or logical location shown by the content area.

Control area 44 of the resource browser has several navigation controls that permit browsing to various different resource areas. The term "resource area" as used herein refers to some physical or logical grouping of resources. For example, a resource area might consist of a particular hard disk drive or other physical storage medium, a particular computer, a file directory or folder within a computer or storage device, a logical grouping of executable control components such as represented in the Windows "control panel", an internet or WWW site, etc. The term "browsing" is used in its common sense, to indicate a process of moving to and from different resource and content areas of a computer or computer network system, while displaying corresponding resources and/or content.

The navigation controls include a resource designation control 60 that indicates the currently displayed resource area and that also lets a user physically enter a resource area identifier such as a URL (universal resource locator) or UNC (universal naming convention) text string. Parameters such as these generally designate a combination of physical and logical storage locations, and can also represent executable components. In order to browse directly to a resource area, a user enters its URL or UNC string into control 60. When a user has browsed to a particular resource area, that area's resources are represented as icons within content area 46.

The navigation controls also include forward and backward navigation controls 62 and 64. The backward navigation control 62 is selected to browse to the most previously visited resource area―this navigation is reversed by the forward navigation control 64. Another navigation control is an "up" control 66, which moves upward in a hierarchy of resources areas.

The display of Fig. 2 assumes that a user has navigated or browsed to a resource area corresponding to a writable storage device such as a writable CD 28, and to a folder or sub-area "\My Media" within the CD. ("D:\My Media", as indicated by resource designation control 60). The phrase "browsed to a resource area" means that the user has caused the resource browser to focus on a particular resource area, and to display any resources or further resource areas of that particular resource area within the content area of the browser.

The resource area in this example is a "staged-write" resource area, in which resources such as files are desirably "staged" prior to writing them to a storage medium associated with the staged-write resource area. In other words, files are designated and queued as a group, and then written in a continuous, batch process. As discussed above, this is the preferable way to write optical storage media such CDs to achieve maximum compatibility with older systems. In the case of a removable medium such as a CD medium, the term "resource area" refers to the medium itself, although the computer also has physical hardware for reading and writing the medium. This hardware will be referred to below as the "drive." It should also be noted that the CD medium itself might contain a hierarchy of logical sub-divisions referred to as folders, each of which itself can be considered a resource area.

In response to browsing to a staged-write resource area, the browser 50 defines two visual sub-areas within content area 46. These visual sub-areas are referred to herein as stored resource display area 70 and staging area or staged resource display area 72. The stored resource display area 70 contains icons representing files or other resources that have already been written to the current staged-write resource area (in this case, "D:\My Media"). The staging area 72, on the other hand, contains icons representing resources that the user has *designated* for writing to the writable storage medium, but that have *not yet* been written.

Icons can be moved to and from the defined content area 46. Moving an icon away from either portion of the visual content area 46 has its normal effect. Similarly, other operations, such as "opening" a file, are also performed in a conventional manner upon. Upon moving an icon *into* the content area, however, the icon is forced into the staging area 72―the resource represented by the icon is not moved or copied to the underlying storage medium at this time. Thus, the resource is said to be *staged* for subsequent writing to the resource area. Other resources may also be moved into the content area and staged for subsequent writing.

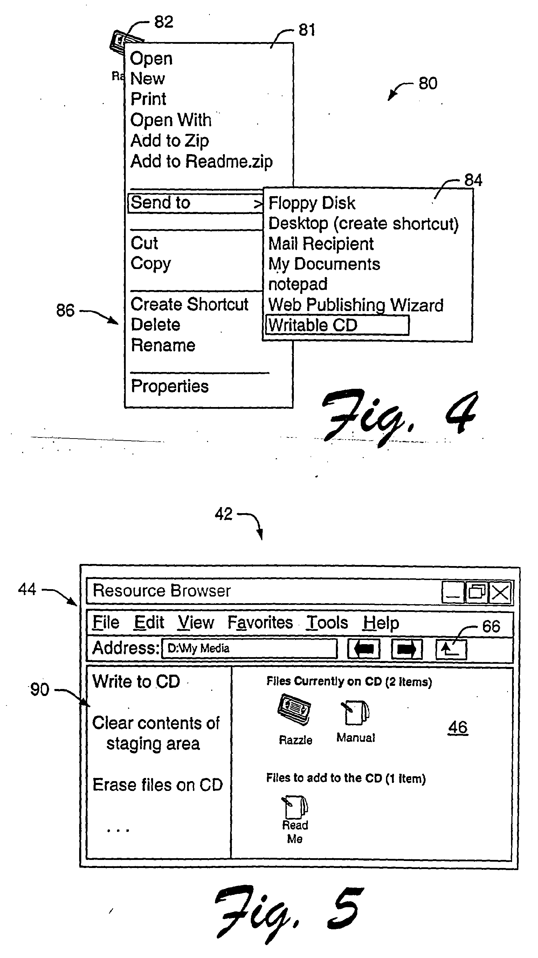

At an appropriate time, when the user has finished designating files, for example, these files are written as a group to the storage medium. During the write process, resource icons are visually highlighted or otherwise differentiated to indicate their status. Small overlays are typically used for this purpose. For example, an easily recognizable overlay might be used to indicate that the resource is in the transitional process of being written to the storage medium. Once written, the overlay is changed or removed, and the resource's icon is moved into stored resource display area 70, as shown in Fig. 3.

Note that status overlays might also be used as an alternative to dividing the content area―staged resources might be indicated simply by overlaying their icons with appropriate "staged" status indicators.

From a user's perspective, the process enabled by the described interface is a tremendous improvement over the prior art. Specifically, the process of writing files to an optical device has been integrated smoothly normal file operations used by the computer's operating system 40, so that batch writing to a CD-ROM varies little from manipulating files stored on other types of media. This integration and ease of use is in stark contrast to prior art user interfaces, which either used incompatible "packet writing" formats or in which a user was required load special-purpose application software, and to manipulate resources using specialized user interfaces and interface paradigms. The integration shown in Figs. 2 and 3 is a significant improvement over prior art methods of writing to optical media and other media that might require staged or batched write processes.

### Operating System Support for Staged Resources

Although the resource browser described above provides a visually intuitive way of understanding the staging concept, and of making this functionality readily apparent to a user, the functionality is also supported at lower, less visible portions of the operating system. As an example, consider that application programs frequently save documents and other user-generated work to storage media specified by the user. In the prior art, a user would have specified a storage medium such as a computer's hard disk, and would have later copied the documents to a CD by initiating a new application program.

In accordance with the technology described herein, however, this two-stage process is no longer necessary. Instead, when a user is asked to specify a location for file storage, writable CDs are included in the storage location options. This change in application functionality is made possible by the fact that application programs typically rely on the operating system for storage functions. For example, application programs typically use a "save as" function, provided by the operating system, for saving files to storage. In this case, the operating system's "save as" function has been modified to also list any available, writable CDs when interacting with the user to store resources.

The concepts already described can be extended to other areas of the operating system. For example, context menus can be used to easily designate resources for inclusion in a CD-ROM staging area. Context menus are perhaps most familiar as short, drop-down menus that can be activated by "right-clicking" (with a mouse of other pointing device) various elements.

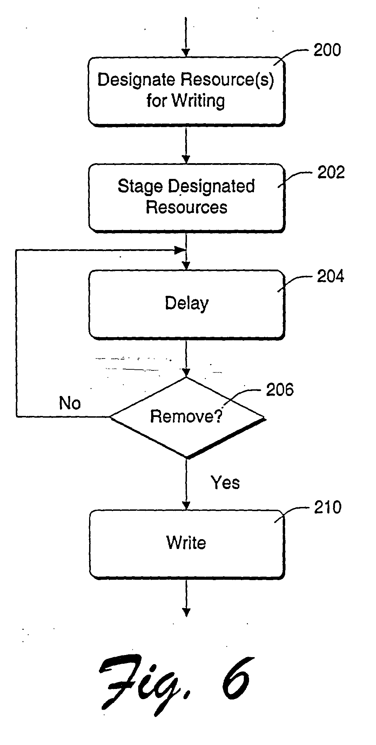

Fig. 4 shows an example of a context menu 80. The context menu is the result of right-clicking on "razzle" icon 82, which represents a file. The main part 81 of the context menu includes a "send to" action. Holding a cursor over the "send to" action expands a sub-menu 84, which lists various destinations to which the icon's corresponding file by be copied or moved. In this case, because of the presence in the computer of a writable CD-ROM, the sub-menu includes an option titled "Writable CD." Selecting this option automatically copies the subject resource to a non-visible staging area, where it is held until the time at which staged resources are written to the CD. Context menus such as this are available in many UI components.

The context menu is modified based on whether an appropriate medium has been inserted in a staged-write drive. For example, the described "Writable CD" option is not displayed when a non-writable CD is present in the computer's CD-ROM drive or when no media is present in the drive. Rather, this option is displayed only when an inserted CD media has write capabilities.

The context menu is modified based not only on the presence of a suitable CD media, but also on the capabilities of that particular media. The "delete" action 86 is an example of a context menu action whose presence might be conditional on the type of media upon which the subject resource itself is stored. In this case, the "razzle" resource is stored on a re-writable media. If the media was not re-writable, the "delete" action would not be present in context menu 80.

Fig. 5 shows a more extensive use of a context menu, where the resource browser has defined a contextually sensitive command area 90 within or alongside content area 46. This area contains commands that allow a user to (a) write any staged resources (90), (b) clear (erase) contents of the staging area (92), and (c) erase or delete files from the resource medium (94). The "delete" command, however, is displayed if and only if the current storage medium is rewritable.

In some of the examples above, a resource can be "staged" without any visible indication in a UI. For example, using a "save as" command or a drop-down context menu does not produce a display such as shown in Fig. 2, in which staged resources are visibly apparent. Nonetheless, the staged resources are noted by the operating system and automatically written later.

After being staged, resources can be actually written in response to a specific user command. Such a command can be made available in context menus or in other portions of the resource browser or operating system UI. However, it will be preferable in many situations to automate the writing process. In accordance with an automated embodiment, the writing process is initiated in response to detecting a user attempt to remove the storage medium to which the resources are to be written.

Fig. 6 illustrates the automatic process. An action 200 comprises designating a file or other resource for writing to a storage medium that has been identified as a staged media―typically an optical medium such as one of those described above. One way to accomplish this is as described above, by visually dragging an icon into an area that represents the storage medium. However, there are other ways that resources and files might be designated for writing. One way, for example, is by way of a context menu as described with reference to Fig. 4 above. Furthermore, such designation might be through non-graphical means, such as through text-entry commands. Alternatively, resources might be designated programmatically by application programs running under supervision of the operating system, using normal file I/O commands.

An action 202 comprises staging any designated resources. This action involves noting the designated resources and in some cases copying them to a designated staging area in computer memory. In the case that the resources have been designated through non-graphical means such by application programs, this step (and subsequent steps) might be performed transparently to such application programs.

Note that the operating system maintains a staging area that is independent of the actual user interface graphics shown in Figs. 2 and 3. When a resource is designated for staging (through graphical or non-graphical means), the operating system creates a reference to that resource in a memory area that has been defined for that purpose. When it is time to write the resource (see subsequent steps, below), the resource is located by de-referencing the noted reference. Using this method, the written resource reflects changes made to the resource was staged. However, the operating system can also support another mode of operation, in which it detects changes to a referenced resource and responds by (a) creating an unchanged copy of the resource and (b) updating the reference to indicate the unchanged copy. The mode of operation more clearly reflects the expectations of the user; the file in its original state (when designated by the user) is the one that is written to disk, regardless of subsequent changes.

An action 204 represents waiting or delaying while the computer, its operating system, and any application programs perform other activities. During this time, the operating system repeatedly performs a check 206 to detect any attempt by a user to eject or remove the storage medium to which the designated resources are to be written.

Upon detecting an attempt to remove or eject the storage mechanism, the operating system performs an action 210 of batch writing the designated resources to the storage medium. In one alternatively, the resources are written before allowing the storage medium to be removed. In another alternative, the resources are written after requesting the user to replace the removed storage medium. In either case, any icons representing the affected resources are altered to indicate their current status―such as an "in-process" status to indicate that the resources are currently being written. As mentioned above, overlays are conveniently used for this purpose.

The first alternative is available in computers and/or operating systems that are able to "lock" the storage medium and to prevent its removal. In these cases, the operating system detects when the user presses the eject button of the storage mechanism or when the a similar request is issued through software. In response, the operating system notifies the user that resources have already been staged, and asks for authorization to complete the writing process before ejecting the storage medium. Assuming that the user agrees, any staged resources are written to the storage medium, and the storage medium is then ejected.

The second alternative is appropriate when the computer and/or operating system is unable to lock the storage medium. In this case, the operating system detects storage medium ejection and responds by notifying the user that there are staged resources destined for the ejected medium. The user is instructed to replace the storage medium, whereupon the staged resources are written. The storage medium is then ejected, after completing the writing process.

To facilitate the writing process, it is advantageous to a contiguous area of mass storage for use as a cache prior to actually writing to the storage medium. Preferably, this area is large enough to contain an entire image of the content to be written to the storage medium. To initiate the writing process, an image is prepared in this pre-allocated area and then streamed to the storage device.

This area is preferably pre-allocated prior to interaction with users and prior to accepting any designations of resources for subsequent writing. Specifically, it is preferable to allocate this area upon installation of the operation system or of whatever program components will be responsible for overseeing the affected storage media. This avoids the situation that might otherwise result, in which insufficient contiguous memory is available at the time of writing.

### Supplemental Resources

Resource browser 50 is configured to associate additional or supplemental resources―resources not specifically designated by a user―for use in conjunction with the staged resources after they are written, and to write such additional or supplemental resources along with the staged resources to the staged-write medium. Specifically, resource browser 50 automatically identifies a viewer program that is compatible with one or more of the resources designated by a user for staging, and writes the viewer program to the storage medium for future use in conjunction with the written resources. As an example, the resource browser might determine that the designated and staged resources comprise primarily graphics files. When this is the case, the resource browser can be configured to also write a graphics viewer to the storage medium. This feature is configurable by a user, with settings that can be overridden just prior to writing the supplemental resources to the storage medium.

### Conclusion

Although details of specific implementations and embodiments are described above, such details are intended to satisfy statutory disclosure obligations rather than to limit the scope of the following claims. Thus, the invention as defined by the claims is not limited to the specific features described above. Rather, the invention is claimed in any of its forms or modifications that fall within the proper scope of the appended claims, appropriately interpreted in accordance with the doctrine of equivalents.

## Claims

1. One or more computer readable media containing one or more operating system programs, said one or more programs comprising:
interacting with a user to manage computer resources;
said interacting including graphically browsing different computer resource areas that contain the resources managed by the operating system;
representing resources within the resource areas as icons, the resources being physically moveable to and from at least some of the resource areas by moving the icons;
at least one of the resource areas being a particular type of writable resource area to which resources can be written;
in response to browsing said at least one of the resource areas, defining a graphical staging area into which a user may move icons representing resources that are to be written to said at least one of the resource areas;
delaying any writing of the resources represented in the staging area until detecting a user attempt to remove a storage medium from said at least one of the resource areas;
in response to detecting the user attempt to remove the storage medium, identifying resources represented by the icons in the staging area and writing such identified resources to the storage medium.

2. One or more computer readable media as recited in claim 1, the programs further comprising:
prior to interacting with the user, pre-allocating a contiguous portion of mass storage for future use when writing identified resources to the storage medium, wherein the pre-allocated portion is large enough to create a data image that is to be created on the storage medium;
prior to writing the staged resources to the storage medium, creating a data image in the pre-allocated portion of mass storage;
wherein writing the identified resources comprises writing the data image to the storage medium.

3. One or more computer readable media as recited in claim 1, the programs further comprising, upon writing the identified resources, writing additional resources not specifically designated by the user for use in conjunction with the identified resources after they are written.

4. One or more computer readable media as recited in claim 1, the programs further comprising, upon writing the identified resources:
automatically identifying a viewer program that is compatible with one or more of the identified resources;
writing the viewer program to the storage medium for use in conjunction with the identified resources after they are written.

5. One or more computer readable media as recited in claim 1, the programs further comprising altering the icons in the staging area to indicate status of the staged resources.

6. One or more computer readable media as recited in claim 27, the programs further comprising altering the icons in the staging area with status overlays to indicate status of the staged resources.

7. One or more computer readable media as recited in claim 1, the programs further comprising altering the icons in the staging area with status overlays to indicate status of the staged resources, the status overlays including a staged status overlay and an in-process status overlay.

8. One or more computer readable media as recited in claim 1, the programs further comprising defining a contextually sensitive command area and displaying a delete resource command option in the contextually sensitive command area if and only if the particular type of writable resource area is rewritable.

9. One or more computer readable media as recited in claim 1, wherein designating a resource for representation in the graphical staging area creates a reference to said designated resource rather than a copy of said designated resource, the programs further comprising dereferencing said reference during writing to write a current version of the designated resource, including any changes to the designated resource subsequent to designating it and prior to writing it.

10. One or more computer readable media as recited in claim 1, the programs further comprising:
prior to interacting with the user, pre-allocating a contiguous portion of mass storage for future use when writing identified resources to the storage medium, wherein the pre-allocated portion is large enough to create a data image that is to be created on the storage medium;
prior to writing the staged resources to the storage medium, creating a data image in the pre-allocated portion of mass storage;
wherein writing the identified resources comprises writing the data image to the storage medium.

11. One or more computer readable media as recited in claim 1, the programs further comprising:
determining whether any changes are made to the identified resources prior to writing them;
if a change is made to a particular identified resource prior to writing, creating an unchanged copy of the particular identified resource;
writing the unchanged copy to the storage medium in place of the particular identified resource, wherein the unchanged copy does not include changes to the particular identified resource subsequent to designating it and prior to writing it.

12. A method comprising:
dynamically accepting designations from a computer user of a plurality of resources to be written to a removable storage medium;
detecting an attempt to remove the storage medium;
in response to detecting a user attempt to remove the storage medium, batch writing the designated resources to the storage medium.

13. A method as recited in claim 12, wherein the batch writing is performed before removing the storage medium;

14. A method as recited in claim 12, further comprising, in response to detecting a user attempt to remove the storage medium, prompting the computer user to replace the storage medium prior to batch writing the designated resources to the storage medium.

15. A method as recited in claim 12, further comprising, upon writing the identified resources, writing additional resources not specifically designated by the user for use in conjunction with the identified resources after they are written.

16. A method as recited in claim 12, further comprising, upon writing the identified resources:
automatically identifying a viewer program that is compatible with one or more of the identified resources;
writing the viewer program to the storage medium for use in conjunction with the identified resources after they are written.

17. A graphical user interface for a computer, comprising:
an operating system that interacts with a user to manage computer resources;
the operating system having a resource browser that is responsive to user input to explore resource areas containing different types of resources and to display icons that represent the resources, at least some of the resources being physically moveable to and from the resource areas by moving their corresponding icons;
at least one of the resource areas being a staged-write resource area;
the resource browser being configured to define a stored resource display area and a staged resource display area, the stored resource display area showing icons of resources that are already stored in the staged-write resource area, the staged resource display area showing icons of staged resources that the user desires to be written to the writable resource area but that have not yet been written to said writable resource area.

18. A graphical user interface as recited in claim 17, the resource browser being further configured to commence writing the staged resources to the writable resource area upon detecting attempted removal of a storage medium corresponding to the writable resource area.

19. A graphical user interface as recited in claim 17, wherein:
the resource browser is further configured, upon writing the staged resources, to write additional resources not specifically designated by the user for use in conjunction with the staged resources after they are written.

20. A graphical user interface as recited in 17, further comprising, upon writing the staged resources:
automatically identifying a viewer program that is compatible with one or more of the staged resources;
writing the viewer program to the storage medium for use in conjunction with the staged resources after they are written.

21. A graphical user interface as recited in claim 17, wherein the resource browser alters the icons to indicate the status of the staged resources.

22. A graphical user interface as recited in claim 17, wherein:
some of the icons have status overlays corresponding to a staged status and an in-process status.

23. A graphical user interface as recited in claim 17, further comprising a contextually sensitive command area, wherein the resource browser includes a delete resource command in the contextually sensitive command area if and only if the particular type of writable resource area is rewritable.

24. A graphical user interface as recited in claim 17, wherein designating a resource for representation in the staged resource display area creates a reference to said designated resource rather than a copy of said designated resource, said reference being dereferenced during writing to write a current version of the designated resource, including any changes to the designated resource subsequent to designating it and prior to writing it.

25. A graphical user interface as recited in claim 17, wherein:
prior to interacting with the user, the operating system pre-allocates a contiguous portion of mass storage for future use when writing identified resources to the writable resource area, wherein the pre-allocated portion is large enough to create a data image that is to be created on the writable resource area;
prior to writing the staged resources to the writable resource area, creating a data image in the pre-allocated portion of mass storage.

26. A graphical user interface as recited in claim 17, wherein the operating system monitors staged resources for changes and creates an unchanged copy of any changed staged resource for subsequent writing to the writable resource area in place of the changed staged resource.

27. A graphical user interface for a computer, comprising:
an operating system that interacts with a user to manage computer resources;
the operating system having a resource browser that is responsive to user input to explore resource areas containing different types of resources and to display icons that represent the resources, at least some of the resources being physically moveable to and from the resource areas by moving their corresponding icons;
at least one of the resource areas being a staged-write resource area;
the resource browser being configured to display icons of stored resources that are already stored in the staged-write resource area and icons of staged resources that the user desires to be written to the staged-write resource area but that have not yet been written to said staged-write resource area.
wherein the resource browser shows different representations of the resources depending upon whether they are stored resources or staged resources;
the resource browser being responsive to a user action to initiate a batch write of the staged resources to the staged-write resource area.

28. A graphical user interface as recited in claim 27, wherein the user action comprises attempting to remove a storage medium corresponding to the staged-write resource area.

29. A graphical user interface as recited in claim 27, wherein:
the resource browser is further configured, upon writing the staged resources, to write additional resources not specifically designated by the user for use in conjunction with the staged resources after they are written.

30. A graphical user interface as recited in claim 27, further comprising, upon writing the staged resources:
automatically identifying a viewer program that is compatible with one or more of the staged resources;
writing the viewer program to the storage medium for use in conjunction with the staged resources after they are written.

31. A graphical user interface as recited in claim 27, further comprising a contextually sensitive command menu, the menu including a delete resource command if and only if the particular type of writable resource area is rewritable.

32. A graphical user interface as recited in claim 27, wherein designating a resource for staging creates a reference to said designated resource rather than a copy of said designated resource, said reference being dereferenced during writing to write a current version of the designated resource, including any changes to the designated resource subsequent to designating it and prior to writing it.

33. A graphical user interface as recited in claim 27, wherein:
prior to interacting with a user to manage computer resources, the operating system pre-allocates a contiguous portion of mass storage for future use, wherein the pre-allocated portion is large enough to create a data image that is to be created on the staged-write resource area;
prior to writing the staged resources to the writable resource area, creating a data image in the pre-allocated portion of mass storage.

34. A graphical user interface as recited in claim 27, wherein:
designating a resource for staging creates a reference to said designated resource rather than a copy of said designated resource;
in response to any subsequent change to the designated resource the operating system creates an unchanged copy of the designated resource, said reference being changed to indicated the unchanged copy;
said reference being dereferenced during writing to write the designated resource or its unchanged copy.

35. One or more computer readable media containing a computer program, the computer program comprising:
accepting designations of different resources by a user for staging prior to writing to a removable storage medium;
graphically representing any resources that are already stored on the removable storage medium and any resources that are staged but not written to the removable storage medium;
detecting a user attempt to remove the removable storage media;
in response to detecting the user attempt to remove the removable storage media, writing any staged resources to the removable storage media.

36. One or more computer readable media as recited in claim 35, the program further comprising, upon writing the staged resources, writing additional resources not specifically designated by a user, for use in conjunction with the staged resources after they are written.

37. One or more computer readable media as recited in claim 35, the program further comprising altering representations of the resources to indicate the status of the staged resources.

38. One or more computer readable media as recited in claim 35, the program further comprising displaying a delete resource command in a contextually sensitive command menu if and only if the particular type of writable resource area is rewritable.

39. One or more computer readable media as recited in claim 35, the program further comprising:
for any staged resource that is changed prior to writing, creating an unchanged copy of the staged resource;
writing the unchanged copy in place of the changed staged resource.

40. One or more computer readable media as recited in claim 35, further comprising:
prior to accepting designations by users, pre-allocating a contiguous portion of mass storage for use when writing staged resources, wherein the pre-allocated portion is large enough to create an image of data to be written to the removable storage medium;
prior to writing the staged resources to the removable storage media, creating a write image in the pre-allocated portion of mass storage;
wherein writing the staged resources comprises writing the write image to the removable storage medium.

41. An operating system embodied on one or more computer readable media, the operating system performing actions comprising:
saving resources in response to requests from application programs;
in response to receiving a request from an application program to save a resource on a staged-write storage medium, noting that resource as being staged without writing the resource;
in response to a user initiation, writing any staged resources to the storage medium.

42. An operating system as recited in claim 41, wherein the user initiation comprises attempting to remove the storage medium.

43. An operating system as recited in claim 41, the actions further comprising, upon writing the staged resources, writing additional resources not specifically designated by a user, for use in conjunction with the staged resources after they are written.

44. An operating system as recited in claim 41, the actions further comprising:
for any staged resource that is changed prior to writing, creating an unchanged copy of the staged resource;
writing the unchanged copy in place of the changed staged resource.

45. An operating system as recited in claim 41, further comprising:
prior to receiving requests from application programs, pre-allocating a contiguous portion of mass storage for use when writing staged resources to the storage media, wherein the pre-allocated portion is large enough to create an image of data to be written to the storage medium;
prior to writing the staged resources to the storage media, creating a write image in the pre-allocated portion of mass storage;
wherein writing the staged resources comprises writing the write image to the storage medium.

46. One or more computer readable media containing a computer program, the computer program comprising:
accepting designations of different resources for staging prior to writing to a removable storage medium;
storing corresponding references to the designated resources;
for any designated resource that is changed prior to writing, creating an unchanged copy of the staged resource and changing the corresponding reference to indicate the unchanged copy;
in response to an instruction to write to the removable storage medium, writing any designated resources and any unchanged copies indicated by the stored references.

47. One or more computer readable media as recited in claim 46, the program further comprising:
prior to receiving designations of different resources, pre-allocating a contiguous portion of mass storage for use when writing staged resources to the removable storage media, wherein the pre-allocated portion is large enough to create an image of data to be written to the removable storage medium;
prior to writing the resources to the storage media, creating a write image in the pre-allocated portion of mass storage;
wherein writing the staged resources comprises writing the write image to the storage medium.
